# EUROPÄISCHE PATENTSCHRIFT

(11) **EP 1 592 593 B1**
(45) Veröffentlichungstag und Bekanntmachung des Hinweises auf die Patenterteilung: **08.08.2007**
(21) Anmeldenummer: 03782426.5
(22) Anmeldetag: 17.12.2003
(51) Int. Cl.: B60T 8/36, F16K 31/06

(54) **ELEKTROMAGNETVENTIL**
SOLENOID VALVE
SOUPAPE ELECTROMAGNETIQUE

(30) Priorität: 05.02.2003 DE 10304766; 21.03.2003 DE 10312559; 15.07.2003 DE 10332345
(43) Veröffentlichungstag der Anmeldung: 09.11.2005
(73) Patentinhaber: Continental Teves AG & Co. oHG, 60488 Frankfurt (DE)
(72) Erfinder: GOOSSENS, Andre F.L., B-2840 Rumst (BE)
(86) Internationale Anmeldenummer: PCT/EP2003/014392
(87) Internationale Veröffentlichungsnummer: WO 2004/069622

(56) Entgegenhaltungen:
- DE-A- 2 052 307
- DE-A- 2 208 183
- DE-A- 10 117 608
- GB-A- 2 204 381
- US-A- 4 771 983
- US-A- 5 344 118

## Beschreibung

Die Erfindung betrifft ein Elektromagnetventil nach dem Oberbegriff des Anspruchs 1.

Bei einem bekannten Elektromagnetventil nach DE 101 17 608 A1 ist das Ventilschließglied als Ventilkolben ausgebildet, der entlang seiner Mantelfläche im Ventilgehäuse präzise geführt werden muss. Dies erfordert enge Passungstoleranzen und eine exakte Ausrichtung des Ventilsitzes gegenüber dem Ventilschließglied. Ferner ist es aufwendig, dass zum Einfügen des Ventilsitzes, des Dichtrings und der dem Dichtring zugehörigen Teile in das Ventilgehäuse der Magnetanker herausnehmbar gestaltet sein muss.

Aus DE 22 08 183 A ist ein Elektromagnetventil der angegebenen Art bekannt, dessen Ventilschließglied selbstzentrierend um einen Drehpunkt im Ventilgehäuse angeordnet ist. Der Drehpunkt befindet sich entfernt vom Ventilschließglied zwischen einem das Ventilschließglied aufnehmenden Stößel und einem Magnetanker, wozu sich der Stößel entweder an einer im Magnetanker angeordneten Kugel oder einem den Magnetanker quer durchdringenden Hohlstift gelenkig abstützt. Der Konstruktionsaufwand zur Anordnung des Drehpunktes innerhalb des Magnetankers als auch der im Drehpunkt auf den Magnetanker während einer Verschwenkung des Ventilschließgliedes wirkenden Reaktionskräfte sind als nachteilig zu bewerten.

Auch DE 22 52 307 A offenbart ein Elektromagnetventil mit einer gelenkigen Aufnahme eines mit einem Ventilschließglied verbundenen Stößels innerhalb eines Magnetankers, sodass sich auch in dieser Ausführungsform nachteilig für die Konstruktion und die Kinematik der Drehpunkt weit entfernt vom Ventilschließglied befindet.

Daher ist es die Aufgabe der vorliegenden Erfindung, ein Elektromagnetventil zu schaffen, das vorgenannte Nachteile nicht aufweist.

Diese Aufgabe wird erfindungsgemäß für ein Elektromagnetventil der angegebenen Art durch die kennzeichnenden Merkmale des Patentanspruchs 1 gelöst.

Weitere Merkmale, Vorteile und Anwendungsmöglichkeiten der Erfindung gehen aus der Beschreibung eines Ausführungsbeispiels hervor.

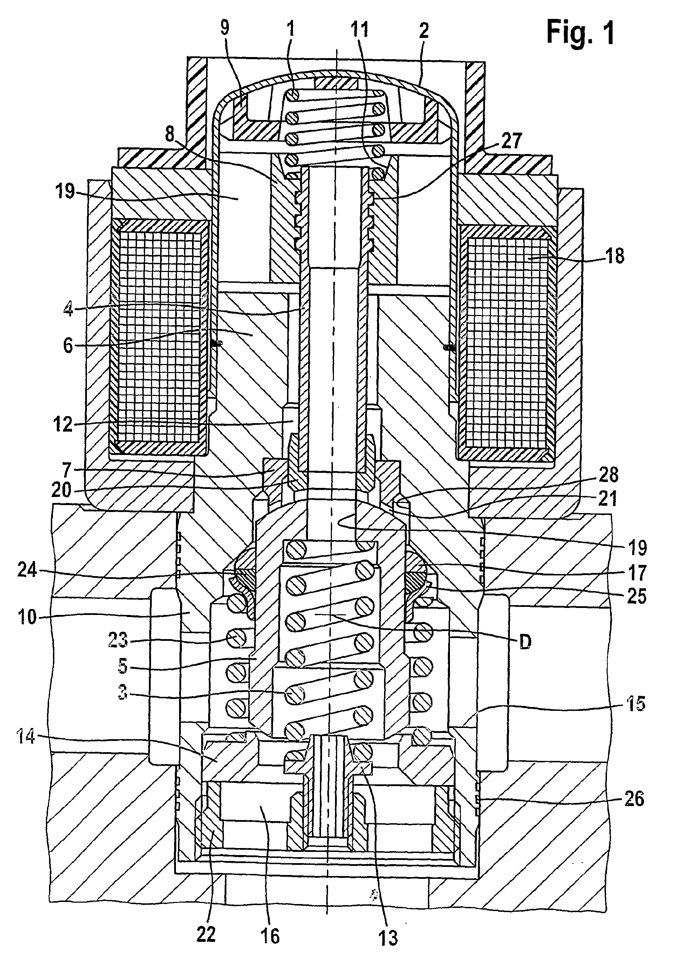

Die Fig. 1 zeigt ein als 2/2-Wege-Sitzventil ausgeführtes Elektromagnetventil in einer Schnittdarstellung. Das Elektromagnetventil weist ein in Patronenbauweise ausgeführtes, vorzugsweise aus korrosionsbeständigem Stahl bestehendes Ventilgehäuse 10 auf, das fertigungstechnisch vorzugsweise als automatengerechtes Drehteil ausgebildet ist und mittels einer Preßverbindung in einem Ventilblock befestigt ist. Um eine gleichmäßige Einpresskraft und eine gute Abdichtung des Ventilgehäuses 10 im Ventilblock zu realisieren, weist das Ventilgehäuse 10 am Umfang umlaufende Rillen 26, Nuten oder Sägezähne auf. Die Rillen 26 ermöglichen überdies, dass der beim Einpressen entstehende Abrieb in den Rillen 26 dauerhaft eingelagert wird, so dass eine Verunreinigung der Kanäle im Ventilgehäuse 10 verhindert wird. Das Mittelteil des Ventilgehäuses 10 ist als rohrförmiger Magnetkern 6 ausgeführt, so dass der Magnetkern 6 mit dem Ventilgehäuse 10 eine einteilige Baugruppe bildet. Auf den Magnetkern 6 ist eine äußerst dünnwandige, vorzugsweise im Tiefziehverfahren hergestellte, im Endbereich topfförmig geschlossene Hülse 2 aufgesetzt, die in ihrem Endbereich eine massive Endscheibe 9 aufnimmt und das Oberteil zum Verschluss des Ventilgehäuses 10 bildet. Die Endscheibe 9 dämpft einerseits das Anschlaggeräusch des Magnetankers 8, andererseits kann sich das im Druckmittel befindliche Gas in einem durch den Endanschlag 9 gebildeten Raum der Hülse 2 anlagern, so dass die Schmierung des bewegten Magnetankers 8 durch das Druckmittel dauerhaft sichergestellt ist. Würde sich nämlich das Gas im Gleitbereich des Magnetankers 8 anlagern, so wäre der Schmierfilm unterbrochen und ein unerwünschter Ankerverschleiß zu erwarten.

Der unterhalb der Endscheibe 9 in der Hülse 2 beweglich angeordnete Magnetanker 8 ist mit einem rohrförmigen Ventilstößel 4 verbunden, der in eine Stufenbohrung 11 des Magnetankers 8 eingeführt ist. Eine besonders einfache und dennoch zuverlässige Verbindung des Magnetankers 8 mit dem Ventilstößel 4 kommt gemäß der Abbildung durch eine formschlüssige Fixierung des Magnetankers 8 am Ventilstößel 4 zustande, indem mittels eines von oben in den hohlen Ventilstößel 4 eingeführten Dorn die Wand des Ventilstößels 4 radial aufgeweitet wird, so dass die Wand des Ventilstößels 4 in die Querrillen 27 des Magnetankers 8 verdrängt wird. Diese Befestigung lässt sich vorteilhaft anwenden, wenn der Ventilstößel 4 aus einem weicheren Material besteht als das Material des Magnetankers 6. Durch die vorgeschlagene Befestigung ist überdies eine einfache präzise Einstellung des Restluftspalts zwischen dem Magnetanker 8 und dem Magnetkern 6 gewährleistet, so dass unabhängig von Fertigungstoleranzen die gewünschten konstanten elektromagnetischen Eigenschaften eingehalten werden können.

Zwischen dem Magnetanker 8 und der Endscheibe 9 befindet sich im Magnetankerraum eine Rückstellfeder 1, die zur sicheren Ausrichtung in der Stufenbohrung 11 abschnittsweise geführt ist. An die aus dem Magnetanker 8 und Ventilstößel 4 bestehende Verbindung schließt sich ein kolbenförmiges Ventilschließglied 5 an, das sich ebenso wie der Ventilstößel 4 innerhalb der zentral gelegenen Durchgangsbohrung 12 des Ventilgehäuses 10 befindet. Die Durchgangsbohrung 12 ist hierzu als Stufenbohrung ausgeführt, die im unteren, erweiterten Stufenabschnitt das Ventilschließglied 5 und darüber eine in der Stufenbohrung befestigte Buchse 7 aufnimmt. Die Buchse 7 ist zur Stößelzentrierung im Innendurchmesser entweder unmittelbar an den Außendurchmesser des Ventilstößels 4 oder gemäß der abgebildeten Ausführung an einen am Stößelende befestigten Topf 20 angepasst.
Der Topf 20 besteht aus einem gegenüber dem Ventilstößelwerkstoff härteren Material bzw. aus einem Material, dessen Oberfläche gehärtet ist. Der Topf 20 ist auf das Ende des Ventilstößels 4 aufgepresst, welches dem Ventilschließglied 5 zugewandt ist.

Der Ventilstößel 4 besteht aus einem Werkstoff mit geringer Dichte, insbesondere aus einem Leichtmetall (Aluminium, Magnesium) oder Kunststoff. Dieser leichte Stößelwerkstoff ermöglicht eine Reduzierung der bewegten Massen und verfügt über federnde Eigenschaften, die zu einer guten Beherrschbarkeit der Impulskräfte und damit der mechanischen Beanspruchung führen. Außerdem ist durch die vorgeschlagene Konstruktion der translatorisch bewegten Ventilbauteile eine großzügig bemessene Druckausgleichsbohrung 19 möglich, die ein von Druckänderungen unabhängiges Ventilschalten gewährleistet.

Durch die Verwendung von Keramik nicht nur für das Ventilschließglied 5, sondern auch für den Ventilsitz 14 ergibt sich eine optimale Voraussetzung für einen nahezu verschleißfreien Betrieb des Elektromagnetventils.

An der Buchse 7 stützt der gewölbte Kolbenabschnitt des Ventilschließgliedes 5 in der stromlosen Ventilschaltstellung ab. Der Außendurchmesser der Buchse 7 ist zur Herstellung einer Pressverbindung mit dem Ventilgehäuse 10 an den Innendurchmesser im erweiterten Abschnitt der Stufenbohrung 28 angepasst, wozu die Stufenbohrung 28 bei Wunsch oder Bedarf mit Rillen, Riefen, Gewindegängen oder dergleichen versehen ist, um die bereits eingangs erwähnte Kontinuität der Einpresskraft sicherzustellen.
Das Ventilschließglied 5 ruht unter der Wirkung einer Ventilfeder 3 in der offenen, elektromagnetisch nicht erregten Position an der Stirnfläche der Buchse 7, die im Kontaktbereich mit dem Ventilschließglied 5 ebenso wie der Boden des Topfs 20 Ausnehmungen 21 zur Hindurchführung des Druckmittels in Richtung des Magnetankerraums aufweist.

Die Ventilfeder 3 ist zweckmäßigerweise mittels eines von unten in die Öffnung des Ventilgehäuses 10 eingefügten Federanschlags 13 vorgespannt, der mittels eines Gewindes auch innerhalb eines Ventilsitzanschlags 22 einstellbar ist. Der als massive Lochscheibe ausgeführte Ventilsitzanschlag 22 weist am Umfang ein Außengewinde auf, das mit einem Innengewinde am unteren Ende des Ventilgehäuses 10 in Eingriff steht, so dass der Ventilsitzanschlag 22 bis zur Kontaktierung des ringscheibenförmigen Ventilsitzes 14 in das Ventilgehäuse 10 von unten hineingedreht ist. Damit ist sichergestellt, dass sich der von unten in das Ventilgehäuse 10 eingepresste Ventilsitz 14 unter Wirkung des hohen hydraulischen Drucks nicht aus seiner einjustierten Pressverbindung mit dem Ventilgehäuse 10 lösen kann. Der rohrförmige Federanschlag 13 befindet sich nach Art einer Einstellschraube mittig in einer zentral gelegenen Gewindebohrung des Ventilsitzanschlags 22.

Die Vorspannkraft der Ventilfeder 3 lässt sich bei elektromagneticher Erregung in der Ventilschließstellung durch das Verdrehen des Federanschlags 13 im Ventilsitzanschlag 22 präzise einstellen. Die schraubenförmige Ventilfeder 3 ist zur präzisen Führung mit ihrem einen Ende innerhalb des rohrförmigen Ventilschließgliedes 5 aufgenommen, während das andere Ende der Ventilfeder 3 sich an einem Bund des Federanschlags 13 abstützt. Die im Innendurchmesser abgesetzte Rohrform des Ventilschließgliedes 5 ermöglicht somit eine sichere, kompakte Aufnahme und Abstützung einzelner Federwindungen der Ventilfeder 3, ohne den hydraulischen Druckausgleich im Ventilgehäuse 10 zu behindern.

Das Ventilgehäuse 10 ist auf Höhe des Ventilschließgliedes 5 und damit oberhalb des Ventilsitzes 14 von einem Druckmitteleinlasskanal 15 horizontal durchdrungen, der in der abbildungsgemäßen offenen Ventilschaltstellung über den offenen Ventilsitz 14, den gelochten Ventilsitzanschlag 22 und die Durchgangsbohrung im Federanschlag 13 mit dem von unten vertikal in das Ventilgehäuse 10 einmündenden Druckmittelauslasskanal 16 verbunden ist.

Das Elektromagnetventil ist hydraulisch druckausgeglichen, wozu am Außenmantel des Ventilschließgliedes 5 ein konzentrischer, federbelasteter Backring 17 angeordnet ist, der von einer am Ventilsitz 14 gelagerten Feder 23 von unten über einen Federteller 25 und einen Dichtring 24 gegen einen konischen Abschnitt der Stufenbohrung 28 gepresst ist. Der Backring 17 stützt sich mit seiner balligen Außenschulter an der konischen Innenwand des gestuften Ventilgehäuses 10 ab, wodurch sich das innerhalb des Dicht- und Backrings 24, 17 geführte Ventilschließglied 5, ähnlich wie in einer Kugelpfanne, nach allen Seiten begrenzt schwenkbar im Ventilgehäuse 10 bewegen kann. Damit auch der Dichtring 24 möglichst widerstandsarm einer toleranzbedingten Schiefstellung der Feder 23 folgen kann, ist dieser gleichfalls in Richtung des trichterförmigen Federtellers 25 ballig geformt. Die balligen Flächen des Backrings 17 und des Dichtrings 24 sind die voneinander abgewandten Flächen, während die aufeinander anliegenden Flächen von Back- und Dichtring 17, 24 ebene Flächen sind. Die Feder 23 gewährleistet eine axiale als auch radiale Kraftwirkung am Dichtring 24, um auch bei geringen hydraulischen Drücken die Dichtwirkung des Dichtrings 24 sicherzustellen. Um die radialen Wärmedehnungen der Ventilbauteile zu kompensieren bedarf es ferner der erwähnten radialen Vorspannkraft. Mit zunehmenden hydraulischen Druck im Druckmitteleinlasskanal 15 kommt es vorteilhaft zu einer Selbstverstärkung der Dichtwirkung des Dichtrings 24. Der Dichtring 24 besteht aus einem Kunststoff, während der Backring 17 als Metallring ausgeführt ist. Der Backring 17 übernimmt außerdem infolge des geschilderten Aufbaus vorteilhaft auch eine statische Dichtfunktion an der kegelförmigen Innendichtfläche des Ventilgehäuses 10.

Damit auch im Kontaktbereich zwischen dem Ventilschließglied 5, der Buchse 7 und dem Topf 20 eine hinreichende Bewegungsfreiraum zum Verschwenken des Ventilschließgliedes 5 gewährleistet ist, weisen auch die zwischen der Buchse 7, dem Topf 20 und dem Ventilschließglied 5 gelegenen Kontaktflächen eine ballige, vorzugsweise als Kugelkalotte geformte Kontur auf.

Der Drehpunkt D zum Verschwenken des kolbenförmigen Ventilschließglieds 5 befindet sich somit auf der Symmetrieachse des Elektromagnetventils etwa auf halber Höhe des Ventilschließgliedes 5. Durch die beschriebene gelenkige Lagerung und Abdichtung des Ventilschließgliedes 5 im Ventilgehäuse 10 ist somit eine einfache und präzise Selbstzentrierung des Ventilschließgliedes 5 am trichterförmigen Dichtsitz des Ventilsitzes 14 gewährleistet. Der Trichterwinkel des Ventilsitzes 14 ist an die ballige, vorzugsweise als Kugelkalotte geformte Dichtfläche des Ventilschließgliedes 5 angepasst, wobei der Trichterwinkel am Ventilsitz 14 derart gewählt ist, dass im Falle eines Verschleißes der Dichtkante des Ventilsitzes 14 der mittlere Abdichtdurchmesser möglichst unverändert bleibt, um somit auch im Langzeitbetrieb die genaue hydraulische Druckkompensation der Elektromagnetventils unverändert aufrecht zu erhalten.

Zur Reduzierung des hydraulischen Widerstands ist der Magnetanker 8, der Ventilstößel 4 und das Ventilschließglied 5 parallel zur Ventilsymmetrieachse von mehreren Druckausgleichsbohrungen 19 durchdrungen. Das in den Druckmittelauslass- bzw. Druckmitteleinlasskanal 16, 15 strömende Druckmittel kann somit ungehindert durch die das Ventilschließglied 5, den Ventilstößel 4 und Magnetanker 8 durchdringende Druckausgleichsbohrung 19 in den Magnetankerraum und damit zum Endbereich der Hülse 2 gelangen, so dass unabhängig von Druck- und Temperaturunterschieden der Flüssigkeit vorteilhaft eine nahezu gleichbleibende Schaltcharakteristik des Elektromagnetventils gewährleistet ist.

Die folgende Beschreibung stellt die Funktionsweise des Elektromagnetventils mit den für die Erfindung wesentlichen Merkmale kurz dar. In der Abbildung nach Fig. 1 befindet sich das Elektromagnetventil in der elektromagnetisch nicht erregten, offenen Grundstellung, in der eine ungehinderte Druckmittelverbindung des Druckmitteleinlasskanals 15 und Druckmittelauslasskanals 16 infolge des vom Ventilsitz 14 abgehobene Ventilschließgliedes 5 gewährleistet ist. In dieser Grundstellung ruht infolge der Wirkung der Ventilfeder 3 die vom Ventilsitz 14 abgewandte Stirnfläche des Ventilschließgliedes 5 an der Stirnseite der Buchse 7. Die Buchse 7 ist derart in der Durchgangsbohrung 12 des Magnetkerns 6 angeordnet, dass in der offenen Ventilstellung der am Ventilstößel 4 befestigte Magnetanker 8 um wenigstens ein dem Ventilhub entsprechendes Maß vom Magnetkern 6 entfernt ist. Die vom Magnetkern 6 abgewandte Stirnfläche des Magnetankers 8 ist in der offenen Ventilstellung, damit gleichfalls um einen definierten Axialabstand von der Endscheibe 9 am domförmigen Abschnitt der Hülse 2 entfernt, wodurch ein sog. Dämpfungshub des Magnetankers 8 ermöglicht wird, um den Magnetanker 8 gemäß der folgenden Funktionsbeschreibung nach der Entmagnetisierung abbremsen zu können.

Zunächst aber, wenn die elektromagnetische Erregung des Ventils erfolgt, entfernt sich das Ventilschließglied 5 von der Buchse 7 nach unten und gelangt durch seine Verschwenkbarkeit selbstzentrierend am Ventilsitz 14 zur Anlage. Während dieses Vorgangs entspannt sich die Rückstellfeder 1 zwangsläufig und die Ventilfeder 3 ist demgegenüber proportional zum Ventilhub vorgespannt, bis nach dem Abschalten der elektromagnetischen Erregung das Magnetfeld der Magnetspule 18 zusammenbricht (Entmagnetisierung). Dann wird die gegenüber der Rückstellfeder 1 steifere Ventilfeder 3 im Ventilöffnungssinn wirksam, die das Ventilschließglied 5, den Topf 20, den Ventilstößel 4 und den Magnetanker 8 entgegen der Wirkung der zunächst schwachen Rückstellfeder 1 in Richtung der Endscheibe 9 beschleunigt. Diese Beschleunigung der aus dem Ventilschließglied 5, der Kappe 20, dem Ventilstößel 4 und dem Magnetanker 8 bestehenden Gesamtmasse findet vorteilhaft nur so lange statt, bis das Ventilschließglied 5 zur Anlage an der Buchse 7 gelangt, so dass die ursprünglich auf den Ventilstößel 4, die Kappe 20 und den Magnetanker 8 wirksame Kraft der Ventilfeder 3 nur noch auf das an der Buchse 7 zur Ruhe gekommene Ventilschließglied 5 wirkt. Folglich bewegt sich dann lediglich die um die Masse des Ventilschließgliedes 5 reduzierten Magnetanker-, Kappen- und Ventilstößelmasse aufgrund ihrer Massenträgheit entgegen der hubproportional ansteigenden Kraft der Rückstellfeder 1 in Richtung der Endscheibe 9 weiter. Mit zunehmender Kompression der Rückstellfeder 1 und unter Berücksichtigung der viskosen Dämpfung des im Magnetankerraum befindlichen Druckmittels, erfährt der Magnetanker 8 und der Ventilstößel 4 während des Dämpfungshubs eine Abbremsung bis zum Stillstand kurz vor der Endscheibe 9 oder unter extrem ungünstigen Bedingungen (Trockenlauf, verschäumte Flüssigkeit) direkt an der Endscheibe 9, mit einer sich daran anschließenden, durch die Rückstellfeder 1 initiierten Umkehrung der Bewegungsrichtung des Magnetankers 8 und Ventilstößels 4 zurück in die abbildungsgemäße Ruhelage, in der der Ventilstößel 4 wieder am Ventilschließglied 5 anliegt. Hierbei ist zu beachten, dass infolge den federnden Eigenschaften des Ventilstößels 4 sowohl die in Richtung der Endscheibe 9 als auch nach erfolgter Bewegungsumkehr in Richtung des Ventilschließgliedes 5 wirksame Impulskraft als auch das Auftreffgeräusch deutlich reduziert ist.

### Bezugszeichenliste

- 1: Rückstellfeder
- 2: Hülse
- 3: Ventilfeder
- 4: Ventilstößel
- 5: Ventilschließglied
- 6: Magnetkern
- 7: Buchse
- 8: Magnetanker
- 9: Endscheibe
- 10: Ventilgehäuse
- 11: Stufenbohrung
- 12: Durchgangsbohrung
- 13: Federanschlag
- 14: Ventilsitz
- 15: Druckmitteleinlasskanal
- 16: Druckmittelauslasskanal
- 17: Backring
- 18: Magnetspule
- 19: Druckausgleichsbohrung
- 20: Kappe
- 21: Ausnehmung
- 22: Ventilsitzanschlag
- 23: Feder
- 24: Dichtring
- 25: Federteller
- 26: Rille
- 27: Querrille
- 28: Stufenbohrung

## Patentansprüche

1. Elektromagnetventil, mit einem Ventilgehäuse (10), das ein mit einem Ventilstößel (4) zusammenwirkendes Ventilschließglied (5) und einen Magnetanker (8) aufnimmt, wobei das Ventilschließglied (5) an einem Ventilsitz (14) sowie der Magnetanker (8) an einem Magnetkern (6) anlegbar sind, mit einer Hülse (2), in der der Magnetanker (8) axial beweglich geführt ist, sowie mit einer am Umfang des Ventilgehäuses (10) bzw. der Hülse (2) angeordneten Magnetspule (18) zwecks Erregung des Magnetankers (8) in eine Schaltstellung, in der das Ventilschließglied (5) entgegen der Wirkung einer Ventilfeder (3) die Druckmittelverbindung zwischen wenigstens einem Druckmitteleinlasskanal (15) und einem Druckmittelauslasskanal (16) im Ventilgehäuse (10) zu sperren vermag, wobei das Ventilschließglied (5) selbstzentrierend um einen Drehpunkt (D) angeordnet ist, **dadurch gekennzeichnet, dass** der Drehpunkt (D) zwischen dem Ventilstößel (4) und dem Ventilsitz (14), innerhalb des Ventilschließgliedes (5) auf dessen Körpersymmetrieachse gelegen ist.

2. Elektromagnetventil nach Anspruch 1, **dadurch gekennzeichnet, dass** das Ventilschließglied (5) rohrförmig gestaltet ist.

3. Elektromagnetventil nach Anspruch 1 oder 2, **dadurch gekennzeichnet, dass** die auf den Ventilstößel (4) und den Ventilsitz (14) gerichteten diametralen Endflächen des Ventilschließgliedes (5) eine durch ihre Radienabstände um den Drehpunkt (D) definierte Kalottenform aufweisen, an die der dem Ventilschließglied (5) zugewandte Endbereich des Ventilstößels (4) angepasst ist.

4. Elektromagnetventil nach Anspruch 3, **dadurch gekennzeichnet, dass** der Endbereich des Ventilstößels (4) durch einen Topf (20) gebildet ist, dessen Oberfläche gehärtet ist.

5. Elektromagnetventil nach Anspruch 2, **dadurch gekennzeichnet, dass** das Ventilschließglied (5) am Außenumfang mit einem Backring (17) versehen ist, der synchron mit einer selbstzentrierenden Schwenkbewegung des Ventilschließgliedes (5) um den Drehpunkt (D) schwenkt und das Ventilschließglied (5) entlang seinem Umfang im Ventilgehäuse (10) abdichtet.

6. Elektromagnetventil nach Anspruch 5, **dadurch gekennzeichnet, dass** der Backring (17) eine durch seinen Radius um den Drehpunkt (D) definierte ballige, vorzugsweise kalottenförmige Außenschulter aufweist, die an einer konischen Innenwand des Ventilgehäuses (10) anliegt.

7. Elektromagnetventil nach Anspruch 6, **dadurch gekennzeichnet, dass** ein Dichtring (24) zwischen dem Backring (17) und der konischen Innenwand eines Federtellers (25) mittels einer Feder (23) axial als auch radial vorgespannt ist, die sich am Ventilsitz (14) abstützt.

8. Elektromagnetventil nach einem der vorangegangenen Ansprüche, **dadurch gekennzeichnet, dass** das Ventilschließglied (5) und der Ventilsitz (14) aus einem Keramikwerkstoff bestehen.

9. Elektromagnetventil nach Anspruch 3, **dadurch gekennzeichnet, dass** der Ventilstößel (4) an seinem dem Ventilschließglied (5) zugewandten Endbereich durch eine Buchse (7) im Ventilgehäuse (10) radial geführt ist, an der sich die dem Ventilstößel (4) zugewandte kalottenförmige Endfläche des Ventilschließgliedes (5) abstützt.

10. Elektromagnetventil nach Anspruch 1, **dadurch gekennzeichnet, dass** sich im domförmig geschlossenen Bereich der Hülse (2) eine Endscheibe (9) befindet, die mit wenigstens einer Aussparung versehen ist, in der sich im Druckmittel befindliches Gas anzulagern vermag.

## Claims

1. Solenoid valve, with a valve housing (10) receiving a valve closure member (5) that cooperates with a valve tappet (4) and a magnet armature (8), with the valve closure member (5) being movable to rest on a valve seat (14) and the magnet armature (8) being movable to rest on a magnet core (6), with a sleeve (2) in which the magnet armature (8) is axially movably guided, and with a magnet coil (18) arranged at the periphery of the valve housing (10) and at the sleeve (2), respectively, for the purpose of energizing the magnet armature (8) to adopt a switch position in which the valve closure member (5) is able to close the pressure fluid connection between at least one pressure fluid inlet channel (15) and one pressure fluid outlet channel (16) in the valve housing (10) in opposition to the effect of a valve spring (3), with the valve closure member (5) being arranged in a self-centering manner around a point of rotation (D),
**characterized in that** the point of rotation (D) is positioned between the valve tappet (4) and the valve seat (14) within the valve closure member (5) on the axis of symmetry of its body.

2. Solenoid valve as claimed in claim 1,
**characterized in that** the valve closure member (5) has a tubular design.

3. Solenoid valve as claimed in claim 1 or 2,
**characterized in that** the diametrical end surfaces of the valve closure member (5) directed to the valve tappet (4) and the valve seat (14) have a spherical segment form defined by their distances of radius around the point of rotation (D), to which form the end zone of the valve tappet (4) facing the valve closure member (5) is adapted.

4. Solenoid valve as claimed in claim 3,
**characterized in that** the end zone of the valve tappet (4) is formed of a bowl (20) having a hardened surface.

5. Solenoid valve as claimed in claim 2,
**characterized in that** the valve closure member (5), at its outside periphery, includes a back ring (17), which swivels about the point of rotation (D) synchronously with a self-centering tilting movement of the valve closure member (5) and seals the valve closure member (5) along its periphery in the valve housing (10).

6. Solenoid valve as claimed in claim 5,
**characterized in that** the back ring (17) includes a spherical, preferably cap-shaped outside shoulder defined by its radius around the point of rotation (D), said shoulder abutting on a conical inside wall of the valve housing (10).

7. Solenoid valve as claimed in claim 6,
**characterized in that** between the back ring (17) and the conical inside wall of a spring plate (25), a sealing ring (24) is axially and radially preloaded by means of a spring (23) that is supported on the valve seat (14).

8. Solenoid valve as claimed in any one of the preceding claims,
**characterized in that** the valve closure member (5) and the valve seat (14) are made of a ceramic material.

9. Solenoid valve as claimed in claim 3,
**characterized in that**, at its end zone facing the valve closure member (5), the valve tappet (4) is guided radially through a bushing (7) in the valve housing (10), on which bushing the cap-shaped end surface of the valve closure member (5) facing the valve tappet (4) is supported.

10. Solenoid valve as claimed in claim 1,
**characterized in that** an end plate (9) is placed in the dome-shaped closed area of the sleeve (2) and includes at least one recess in which gas contained in the pressure fluid can deposit.

## Revendications

1. Soupape électromagnétique, avec un boîtier de soupape (10), qui loge un élément de fermeture de soupape (5) coopérant avec un piston de soupape (4) et une armature magnétique (8), dans laquelle l'élément de fermeture de soupape (5) est applicable sur un siège de soupape (14) de même que l'armature magnétique (8) sur un noyau magnétique (6), avec un manchon (2), dans lequel l'armature magnétique (8) est guidée axialement de manière mobile et avec une bobine magnétique (18) agencée à la périphérie du boîtier de soupape (10) ou du manchon (2) dans le but d'activer l'armature magnétique (8) pour adopter une position de commutation dans laquelle l'élément de fermeture de soupape (5) est capable de fermer le raccord de fluide sous pression dans le boîtier et de soupape (10) entre au moins un canal d'entrée de fluide sous pression (15) et un canal de sortie de fluide sous pression (16) en opposition à l'action d'un ressort de soupape (3), dans laquelle l'élément de fermeture de soupape (5) est agencé de manière autocentrée autour d'un point de rotation (D), **caractérisée en ce que** le point de rotation (D) entre le piston de soupape (4) et le siège de soupape (14), est disposé à l'intérieur de l'élément de fermeture de soupape (5) sur son axe de symétrie de corps.

2. Soupape électromagnétique selon la revendication 1, **caractérisée en ce que** l'élément de fermeture de soupape (5) est de forme tubulaire.

3. Soupape électromagnétique selon la revendication 1 ou 2, **caractérisée en ce que** les surfaces des extrémités diamétrales dirigées vers le piston de soupape (4) et le siège de soupape (14) de l'élément de fermeture de soupape (5) présentent une forme sphérique définie par leurs distances de rayon autour du point de rotation (D), à laquelle la région d'extrémité du piston de soupape (4) opposée à l'élément de fermeture de soupape (5) est adaptée.

4. Soupape électromagnétique selon la revendication 3, **caractérisée en ce que** la région d'extrémité du piston de soupape (4) est formé par un creuset (20), dont la surface est durcie.

5. Soupape électromagnétique selon la revendication 2, **caractérisée en ce que** l'élément de fermeture de soupape (5) est muni à sa périphérie extérieure d'une bague de support (17), qui bascule de manière synchrone autour du point de rotation (D) avec un mouvement de basculement d'auto-centrage de l'élément de fermeture de soupape (5) et ferme de manière étanche l'élément de fermeture de soupape (5) le long de sa périphérie dans le boîtier de soupape (10).

6. Soupape électromagnétique selon la revendication 5, **caractérisée en ce que** la bague de support (17) présente un épaulement extérieur bombé, de préférence de forme sphérique, définie par son rayon autour du point de rotation (D), qui repose sur une paroi intérieure conique du boîtier de soupape (10).

7. Soupape électromagnétique selon la revendication 6, **caractérisée en ce que** une bague d'étanchéité (24) est pré-contrainte de manière axiale et radiale au moyen d'un ressort (23) entre la bague de support (17) et la paroi intérieure conique d'une plaque de ressort (25), qui est supportée sur le siège de soupape (14).

8. Soupape électromagnétique selon l'une quelconque des revendications précédentes, **caractérisée en ce que** l'élément de fermeture de soupape (5) et le siège de soupape (14) consistent en un matériau céramique.

9. Soupape électromagnétique selon la revendication 3, **caractérisée en ce que** le piston de soupape (4) est guidé radialement à sa région d'extrémité tournée vers l'élément de fermeture de soupape (5) par une douille (7) dans le boîtier de soupape (10), sur laquelle repose la surface d'extrémité de forme sphérique de l'élément de fermeture de soupape (5) opposée au piston de soupape (4).

10. Soupape électromagnétique selon la revendication 1, **caractérisée en ce qu'**une plaque d'extrémité (9) se trouve dans une région fermée en forme de dôme du manchon (2), qui est munie d'au moins un évidement, dans lequel du gaz contenu dans le fluide sous pression peut s'accumuler.
